# EUROPEAN PATENT APPLICATION

(11) **EP 3 734 073 A1**
(43) Date of publication of application: **04.11.2020**
(21) Application number: 18895411.9
(22) Date of filing: 19.12.2018
(51) Int. Cl.: F04B 39/12, F04B 39/06

(54) **CRANKSHAFT ASSEMBLY STRUCTURE FOR FOUR-CYLINDER ELECTRIC AIR COMPRESSOR, AND FOUR-CYLINDER ELECTRIC AIR COMPRESSOR**

(30) Priority: 28.12.2017 CN 201721893157 U; 24.04.2018 CN 201810370835
(71) Applicant: Wabco (China) Co., Ltd., Qingdao, Shandong 266510 (CN)
(72) Inventor: YUAN, Haiqiang, Qingdao, Shandong 266510 (CN); KIM, Seung Wook, Qingdao, Shandong 266510 (CN)
(74) Representative: Bandpay & Greuter
(86) International application number: PCT/CN2018/122189
(87) International publication number: WO 2019/128816

(57) **Abstract**

A crankshaft assembly structure for a four-cylinder electric air compressor, and a four-cylinder electric air compressor. An end face of a crankshaft (11) driving end of the crankshaft assembly structure for the four-cylinder electric air compressor is provided with a shaft hole (112), an inner wall of the shaft hole (112) being provided with at least one first keyway (113), and a side face of the crankshaft driving end being provided with a bearing assembly seat (111); an inner ring (191) of a bearing (19) is assembled on the bearing assembly seat (111) of the crankshaft driving end, and a balance block (18) is assembled outside the bearing (19) at the crankshaft driving end; an outer ring (192) of the bearing (19) is in assembled connection with a motor flange (21), an output shaft (16) of an electric motor (3) is provided with at least one second keyway (161), the output shaft (16) of the electric motor (3) is inserted into a shaft hole (112) of the crankshaft driving end, and the first keyway (113) and the second keyway (161) are connected by means of a flat key (22). Said structure replaces the coupler connection mode, optimizes the arrangement of the electric air compressor, and simplifies the assembly of the electric air compressor.

## Description

### TECHNICAL FIELD

The present disclosure belongs to the technical field of electric air compressors, and in particular to a crankshaft assembly structure for a four-cylinder electric air compressor and a four-cylinder electric air compressor.

### BACKGROUND

With rapid development of new energy vehicles, each assembly has to be made economical so as to save energy for the vehicle. Pure electric vehicles adopt electric air compressors. During operation of the vehicle, after a braking pipe pressure reaches an unloading pressure of an air dryer, the air compressor is stopped; when the braking pipe pressure drops to a set lower limit value over use, the air compressor is restarted. In this way, the operation economy is realized.

An output shaft of a motor of the existing electric air compressor is generally connected to a crankshaft by using a coupler. The coupler connection is flexible with an elastomer in the middle of the coupler. The elastomer is made of Acrylonitrile Butadiene Styrene (ABS), thus the elastomer has a limited service life and requires regular replacement. The high costs of the coupler are not helpful to reduction of product costs. In a power transmission process, the coupler connection easily generates a noise. With the coupler connection, both ends of an output shaft of a motor need to be supported by bearings, and a crankshaft driving end also needs to be supported by a bearing, resulting in use of many components.

In addition, the existing electric air compressors are mostly rated at IP65, thus the rating is relatively low. The existing electric air compressor is driven by a three-phase alternating-current asynchronous motor which is high in noise. A cylinder bore of the existing air compressor is about 85 mm. Such air compressor features large size, large weight, high noise, and large installation space. In addition, the existing air compressor requires supply of coolant from the vehicle due to no capability to provide independent cooling.

Therefore, the prior art is to be further improved and enhanced.

### SUMMARY

### Technical Problem

### Solutions to Problems

### Technical Solutions

To solve the shortcomings of the prior art described above, the present disclosure provides a crankshaft assembly structure for a four-cylinder electric air compressor and a four-cylinder electric air compressor. In the present disclosure, the coupler connection is replaced, the arrangement of the electric air compressor is optimized and the assembly of the electric air compressor is simplified.

The present disclosure provides a crankshaft assembly structure for a four-cylinder electric air compressor, including a crankshaft, a motor, a bearing, a balance block and a motor flange. A shaft hole is opened on an end face of a crankshaft driving end, at least one first keyway is disposed on an inner wall of the shaft hole, and a bearing assembly seat is disposed on a side surface of the crankshaft driving end; an inner ring of a bearing is assembled on the bearing assembly seat of the crankshaft driving end, and a balance block is assembled to be on the crankshaft driving end and at an outer side of the bearing; an outer ring of the bearing is assembly-connected with the motor flange, at least one second keyway is disposed on an output shaft of the motor, and the output shaft of the motor is inserted into the shaft hole of the crankshaft driving end, so that the first keyway is connected with the second keyway by a key.

Further, the crankshaft assembly structure for a four-cylinder electric air compressor includes a lock nut, where an external thread is disposed at a position that is on the side surface of the crankshaft driving end and close to the end face, and the lock nut is thread-connected with the external thread of the crankshaft driving end to tightly press the balance block.

Further, the crankshaft assembly structure for a four-cylinder electric air compressor includes a cylinder block, where a crankshaft is disposed within the cylinder block, the motor flange includes a flange plate and a flange sleeve located at the middle of the flange plate, the cylinder block is assembled at an end face of one end of the output shaft of the motor through the flange plate, the flange sleeve is embedded into the cylinder block, and the outer ring of the bearing is assembly-connected within the flange sleeve.

Further, the flange plate is assembly-connected with the motor, a plurality of bolt holes are disposed at an edge of the flange plate, a plurality of assembly holes corresponding to the bolt holes are disposed on the cylinder block, and bolts are connected to the bolt holes through the assembly holes to assembly-connect the cylinder block with the flange plate.

Further, a first keyway is disposed on the inner wall of the shaft hole, a second keyway is disposed on the output shaft of the motor, and the first keyway is connected with the second keyway by a flat key.

Further, the first keyway is formed by opening a groove on the inner wall of the shaft hole along a radial direction of the crankshaft.

Further, the second keyway is formed by opening a groove on the side surface of the output shaft of the motor toward a shaft center of the output shaft.

The present disclosure further provides a four-cylinder electric air compressor, including a left cylinder block and a right cylinder block, and further including the crankshaft assembly structure for a four-cylinder electric air compressor described above, where a motor is disposed between the left and right cylinder blocks, two cylinder heads are disposed at top ends of the left and right cylinder blocks respectively, two cylinder heads at the top end of the left cylinder block are arranged in a V-shape and two cylinder heads at the top end of the right cylinder block are also arranged in a V-shape, a crankshaft, a first connecting rod, a second connecting rod, a first piston and a second piston are all disposed within each of the left and right cylinder blocks, one end of the first connecting rod is sleeved on the crankshaft, the other end of the first connecting rod is connected with the first piston, one end of the second connecting rod is sleeved on the crankshaft, and the other end of the second connecting rod is connected with the second piston; the motor is a dual output shaft motor, the crankshafts within the left and right cylinder blocks are driven by two output shafts of the motor to rotate respectively, and the crankshaft rotates to drive the first and second connecting rods to perform cycloidal motion and further drive the first and second pistons to perform reciprocating linear motion so as to realize air suction and discharge of the cylinder head.

Further, an air outlet is disposed on each cylinder head respectively, the four-cylinder electric air compressor further includes an air discharge pipe, one end of the air discharge pipe is in communication with the air outlet of the cylinder head, and the other end of the air discharge pipe is connected to an air channel of a vehicle.

Further, the four-cylinder electric air compressor includes two electronic fans for reducing temperatures of the cylinder heads, where one electronic fan is located at an outer side of the left cylinder block and between two cylinder heads of the left cylinder block, and the other electronic fan is located at an outer side of the right cylinder block and between two cylinder heads of the right cylinder block.

### Beneficial Effects of The Invention

### Beneficial Effects

By adopting the above technical solutions, the present disclosure achieves the following beneficial effects.
1. In the crankshaft assembly structure for a four-cylinder electric air compressor of the present disclosure, the output shaft of the motor and the crankshaft are directly connected by the key without the coupler. In this case, the cost becomes relatively low, the number of components such as a bearing is reduced, the service life of power connection is prolonged, and the noise is reduced in the power transmission process.
2. In the crankshaft assembly structure for a four-cylinder electric air compressor of the present disclosure, the bearing may be moved toward the crankshaft to be close to a rod body of the connecting rod of the crankshaft for arrangement, so that the output shaft of the motor receives less force, and load is mainly concentrated on the crankshaft with higher strength, thereby prolonging the service life of the output shaft of the motor.
3. In the present disclosure, two cylinder heads on the same cylinder block are arranged in a V-shape to optimize an overall arrangement of the electric air compressor. The entire air compressor is designed in a split type, simplifying assembly procedures and improving an assembly efficiency.
4. The left and right cylinder blocks of the present disclosure are made of an aluminum material, the weight is greatly reduced, the size of the cylinder bore is decreased, and the overall dimension becomes small, thereby saving the installation space.
5. In the present disclosure, the motor is a permanent magnet synchronous motor, greatly reducing the noise during the operation. In addition, a damping pad is disposed at a bottom end of an installation bracket of each cylinder block, further reducing a vibration noise during the operation.
6. In the present disclosure, the electronic fan is adopted to lower the temperature of each cylinder head, so that the electric air compressor in the present disclosure has an independent cooling capability. In addition, in the present disclosure, a change of a connection manner of an inlet pipe and the air discharge pipe greatly increases the IP rating of the electric air compressor in the present disclosure.

### BRIEF DESCRIPTION OF THE DRAWINGS

### Description of Drawings

FIG. 1 is an overall assembly view of a four-cylinder electric air compressor according to an embodiment of the present disclosure.
FIG. 2 is a half-sectional view of a left cylinder block or a right cylinder block in a four-cylinder electric air compressor according to an embodiment of the present disclosure.
FIG. 3 is an axonometric view of a left cylinder block or a right cylinder block in a four-cylinder electric air compressor according to an embodiment of the present disclosure.
FIG. 4 is an exploded view of a cylinder head in a four-cylinder electric air compressor according to an embodiment of the present disclosure.
FIG. 5 is a partial assembly view in a four-cylinder electric air compressor according to an embodiment of the present disclosure.
FIG. 6 is a first perspective view of an inlet air storage tank according to an embodiment of the present disclosure.
FIG. 7 is a second perspective view of an inlet air storage tank according to an embodiment of the present disclosure.
FIG. 8 is a sectional view of a crankshaft assembly structure for a four-cylinder electric air compressor according to an embodiment of the present disclosure.
FIG. 9 is an assembly view of an output shaft of a motor and a crankshaft according to an embodiment of the present disclosure, where the crankshaft is a sectional view.
FIG. 10 is a perspective view of a lock nut according to an embodiment of the present disclosure.
FIG. 11 is a perspective view of a balance block according to an embodiment of the present disclosure.
FIG. 12 is a perspective view of a bearing according to an embodiment of the present disclosure.
FIG. 13 is a perspective view of a first connecting rod according to an embodiment of the present disclosure.
FIG. 14 is a perspective view of a motor flange according to an embodiment of the present disclosure.
FIG. 15 is a perspective view of an output shaft of a motor according to an embodiment of the present disclosure.
FIG. 16 is a perspective view of a crankshaft according to an embodiment of the present disclosure.
FIG. 17 is a perspective view of a crankshaft assembled with a bearing, a balance block and a lock nut according to an embodiment of the present disclosure.

Numerals of the drawings are described as follows:
1. left cylinder block, 2. right cylinder block, 3. motor, 4. inlet air storage tank, 41. inlet air tank body, 42. air distributing tank body, 43. air inlet, 44. air discharge branch, 45. return air orifice , 46. assembly lug, 47. annular groove, 5. electronic fan, 6. cylinder head, 61. cylinder cover, 62. sealing gasket, 63. discharge valve plate, 64. inlet valve plate, 65. cylinder liner, 7. inlet port, 8. air discharge pipe, 9. installation bracket, 10. damping pad, 11. crankshaft, 111. bearing assembly seat, 112. shaft hole, 113. first keyway, 12. first connecting rod, 13. first piston, 14. second connecting rod, 15. second piston, 16. output shaft, 161. second keyway, 17. lock nut, 18. balance block, 19. bearing, 191. inner ring, 192. outer ring, 21, motor flange, 211. flange plate, 212. flange sleeve, 213. bolt hole, and 22. flat key.

### DETAILED DESCRIPTION OF THE EMBODIMENTS

### Embodiment of The Invention

The present disclosure is further described in detail below in combination with accompanying drawings and specific embodiments, but the present disclosure is not limited to these embodiments.

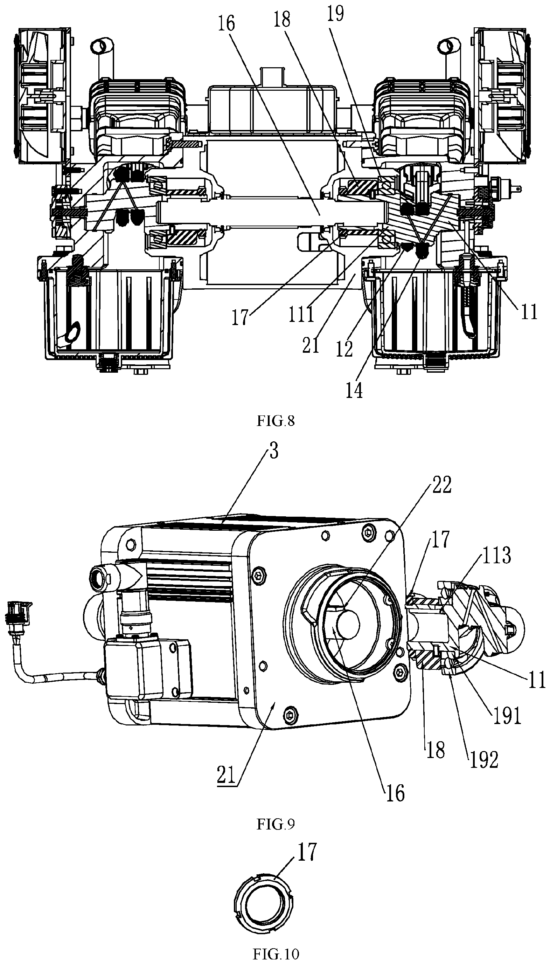

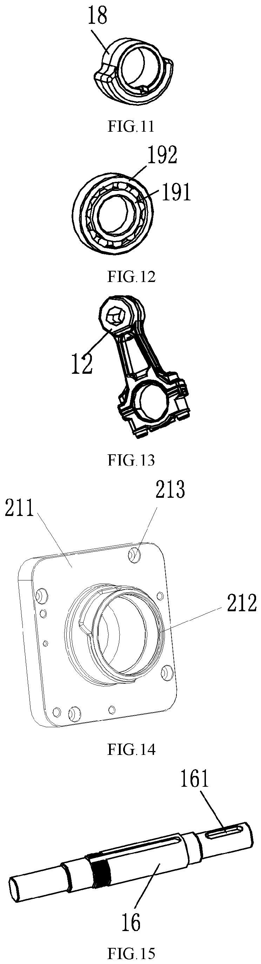

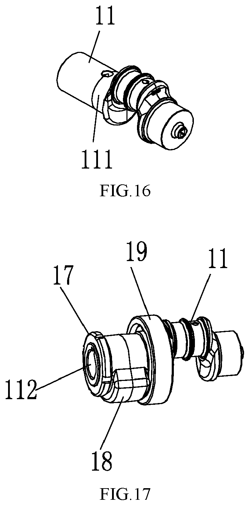

As shown in FIGS. 8-17, a crankshaft assembly structure for a four-cylinder electric air compressor includes crankshaft 11, a motor 3, a bearing 19, a balance block 18, a lock nut 17 and a motor flange 21.

A driving end of a crankshaft 11 is connected to an output shaft 16 of the motor 3, a shaft hole 112 is opened on an end face of the driving end of the crankshaft 11, a first keyway 113 is formed by opening a groove on an inner wall of the shaft hole 112 along a radial direction of the crankshaft 11, a bearing assembly seat 111 is disposed on a side surface of the driving end of the crankshaft 11, and an external thread is disposed at a position that is on the side surface of the driving end of the crankshaft 11 and near the end face.

An inner ring 191 of the bearing 19 is assembled on the bearing assembly seat 111 of the driving end of the crankshaft 11. An assembly opening is opened on the balance block 18, and the driving end of the crankshaft 11 passes through the assembly opening on the balance block 18 to assemble the balance block 18 to be on the crankshaft 11 and at an outer side of the bearing 19. An external thread of the driving end of the crankshaft 11 tightens the lock nut 17 to tightly press the balance block 18, so as to fix the balance block 18 on the assembly structure of the crankshaft 11. The balance block 18 is used to balance unbalanced centrifugal inertia force and inertia moment of the crankshaft 11 to reduce a vibration amplitude and a vibration frequency of the crankshaft 11 subsequent to high-speed rotation, so that the crankshaft 11 operates more stably.

The motor flange 21 includes a flange plate 211 and a flange sleeve 212 located at the middle of the flange plate 211, and a plurality of bolt holes 213 are disposed at an edge of the flange plate 211. A plurality of assembly holes corresponding to the bolt holes 213 are disposed on the left cylinder block 1 and the right cylinder block 2. The flange plate 211 is assembly-connected to an end face of one end of the output shaft 16 of the motor 3, and bolts are connected to the bolt holes 213 through the assembly holes to respectively assembly-connect the flange plate 211 with the left cylinder block 1 and the right cylinder block 2. At the same time, the flange sleeve 212 of the motor flange 21 at the left side is embedded into the left cylinder block 1; the flange sleeve 212 of the motor flange 21 at the right side is embedded into the right cylinder block 2. An outer ring 192 of the bearing 19 is assembly-connected within the flange sleeve 212 of the motor flange 21.

A second keyway 161 is formed by opening a groove on a side surface of the output shaft 16 of the motor 3 toward a shaft center of the output shaft, the output shaft 16 of the motor 3 is inserted into the shaft hole 112 of the driving end of the crankshaft 11, so that the first keyway 113 is connected with the second keyway 161 by a flat key 22.

In the crankshaft assembly structure for a four-cylinder electric air compressor according to an embodiment, the output shaft 16 of the motor 3 and the crankshaft 11 are directly connected by the key without a coupler. In this case, the cost becomes relatively low, the number of components such as the bearing 19 is reduced, the service life of power connection is prolonged, and the noise in the power transmission process is reduced. The position of the bearing 19 may be moved toward the crankshaft 11 to be close to the rod body of the connecting rod of the crankshaft 11 for arrangement, so that the output shaft 16 of the motor 3 receives less force and the load is mainly concentrated on the crankshaft 11 with higher strength, thereby prolonging the service life of the output shaft 16 of the motor 3.

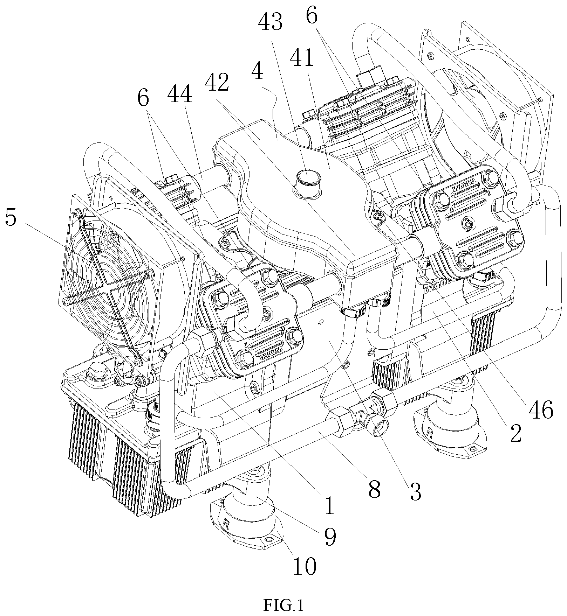

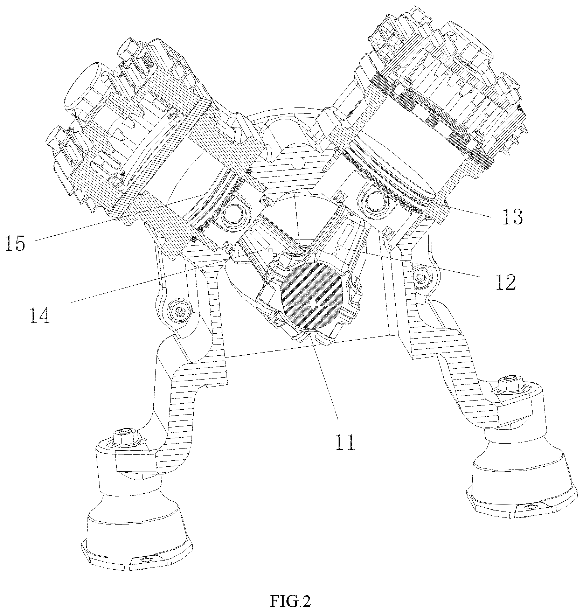

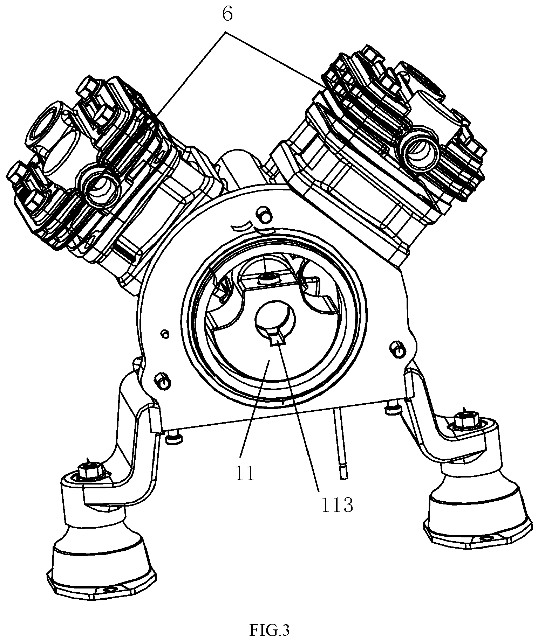

As shown in FIGS. 1-5, a four-cylinder electric air compressor includes a motor 3, a left cylinder block 1 and a right cylinder block 2, and the motor 3 is disposed between the left and right cylinder blocks. The left and right cylinder blocks are both made of an aluminum material, reducing an overall weight thereof.

Installation brackets 9 are disposed at bottom ends of the left and right cylinder blocks respectively, and a damping pad 10 is disposed at a bottom end of each installation bracket 9.

Two cylinder heads 6 are disposed at top ends of the left and right cylinder blocks respectively, and two cylinder heads 6 at the top end of the left cylinder block 1 are arrange in a V-shape and two cylinder heads 6 at the top end of the right cylinder block 2 are also arranged in a V-shape. Each cylinder head 6 includes a cylinder cover 61, a sealing gasket 62, a discharge valve plate 63, an inlet valve plate 64 and a cylinder liner 65 which are sequentially disposed from top to bottom, and the cylinder liners 65 of the cylinder heads 6 are connected with the left cylinder block 1 and the right cylinder block 2 respectively. An inlet port 7 is disposed on each cylinder head 6, and is used to connect with the air discharge branch 44.

The crankshaft 11, a first connecting rod 12, a second connecting rod 14, a first piston 13 and a second piston 15 are all disposed within each of the left and right cylinder blocks. One end of the first connecting rod 12 is sleeved on the crankshaft 11, the other end of the first connecting rod 12 is connected with the first piston 13, one end of the second connecting rod 14 is sleeved on the crankshaft 11, and the other end of the second connecting rod 14 is connected with the second piston 15.

The motor 3 is a dual output shaft motor, and the motor 3 is a permanent magnet synchronous motor. The crankshafts 11 within the left and right cylinder blocks are driven by two output shafts of the motor 3 to rotate respectively.

The crankshaft 11 rotates to drive the first and second connecting rods to perform cycloidal motion and further drive the first and second pistons to perform reciprocating linear motion so as to realize air suction and discharge of the cylinder head 6. Specifically, when the first piston 13 and the second piston 15 move down, the inlet valve plate 64 is opened, the discharge valve plate 63 is closed, and the air compressor performs an air suction process; when the first piston 13 and the second piston 15 move up, the inlet valve plate 64 is closed, the discharge valve plate 63 is opened, and the air compressor performs an air compression process to compress the air sucked in the above suction process and then discharge the air to an air channel of a vehicle.

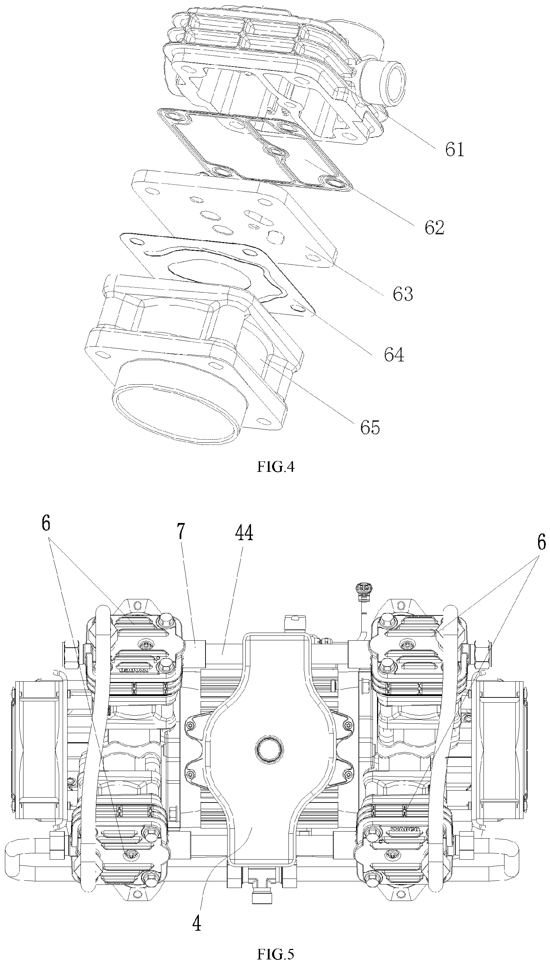

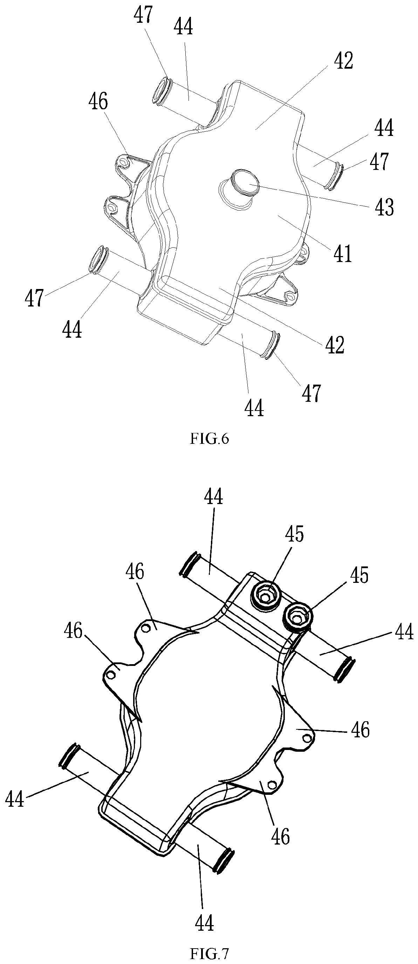

As shown in FIGS. 5-7, the four-cylinder electric air compressor of this embodiment further includes an inlet air storage tank 4. The air inlet storage tank 4 includes an inlet air tank body 41 and two air distributing tank bodies 42, and the two air distributing tank bodies 42 are symmetrically disposed at front and rear ends of the inlet air tank body 41. The inlet air tank body 41 is in communication with the two air distributing tank bodies 42, and the inlet air storage tank 4 is presented in an integral shape in which the inlet air tank body 41 narrows toward the air distributing tank bodies 42. Connection portions of the inlet air tank body 41 and the two air distributing tank bodies 42 are transitioned in an arc shape, so that an air flow entering the inlet air tank body 41 can be smoothly transported to each air distributing tank body 42, thereby reducing the noise. An air inlet 43 is disposed on an upper surface of the inlet air tank body 41. Air discharge branches 44 are connected at both sides of the air distributing tank body 42 respectively, and two air discharge branches 44 on the same air distributing tank body 42 are symmetrically arranged. The distances of the air inlet 43 from the four air discharge branches are same to facilitate uniform and sufficient air distribution of the inlet air storage tank 4. Two return air orifices are disposed at a lower surface of one of two air distributing tank bodies 42.

In the four-cylinder electric air compressor of this embodiment, the air inlet 43 of the inlet air storage tank 4 is connected to an air filter of the vehicle. Air filtered by the air filter firstly enters the inlet air tank body 41 via the air inlet 43, the incoming air is buffered in the inlet air tank body 41, and then uniformly distributed to the inlet ports 7 on four cylinder heads 6 of the electric air compressor through the four symmetrical air discharge branches 44 of the air distributing tank bodies 42 on both sides of the inlet air tank body 41. The four symmetrical air discharge branches 44 are in direct communication with the four cylinder heads 6 of the electric air compressor and can distribute the air uniformly and efficiently so as to realize the air suction process of the electric air compressor. The inlet air storage tank 4 can uniformly distribute the incoming air to the four cylinder heads 6 of the four-cylinder electric air compressor, thereby decreasing a negative pressure of the incoming air and facilitating reducing oil carryover. Further, this designing manner decreases suction frequency and reduces the suction noise.

During the reciprocating motion of the first piston 13 and the second piston 15 of the electric air compressor, an air volume within the cylinder head 6 will be changed, and an air volume within the inlet air storage tank 4 is further changed, thereby generating pressure fluctuation. To avoid such pressure fluctuation, return air orifices 45 are disposed at a lower surface of one air distributing tank body 42 and communicated with the left cylinder block 1 and the right cylinder block 2 respectively through an independent pipe. The four-cylinder electric air compressor of this embodiment not only realizes functions that a traditional pipe design has, but also effectively buffers the air through an overall symmetrical structure, thereby reducing the noise of the electric air compressor and efficiently and uniformly distributing the air entering the cylinder heads 6 of the electric air compressor.

The inlet air storage tank 4 effectively buffers the air and reduces the working noise by replacing a traditional three-way joint. The noise reduction principle thereof is as follows: the four-cylinder electric air compressor does not simply suck an air flow of stable pressure from the outside; since each cylinder head 6 can generate air flow fluctuation in the air suction process, the air flow fluctuation in an air suction system of the four-cylinder electric air compressor is extremely complex. In the air suction process, due to a suction effect of the piston, a negative pressure wave is formed at the inlet port 7 on the cylinder head 6, and a noise generated due to friction between the piston and an inner wall of the cylinder head 6 will also be emitted through the incoming air. The inlet air storage tank 4 buffers the negative pressure wave formed by the incoming air pressure to reduce the pressure fluctuation and buffer the noise, thereby reducing the noises generated by the incoming air and the piston motion.

In this embodiment, the inlet air storage tank 4, the inlet air tank body 41, the air distributing tank bodies 42 and the air discharge branches 44 are integrally formed by high-strength plastic. The inlet air storage tank 4 of this embodiment facilitates moulding production. In this case, the product weight is reduced with the overall strength being guaranteed, which satisfies requirements of vehicle-mounted systems for safety, light weight and compactness of components. The integral design of the inlet air storage tank 4 and the four air discharge branches 44 simplifies the inlet pipe, reduces the installation space, and achieves the easier installation and the simpler external appearance. An annular groove 47 for assembling an O-shaped ring is disposed at an end of the air discharge branch 44. The O-shaped ring is embedded into the annular groove 47 of the air discharge branch 44 so that the air discharge branch 44 is directly clamped to the inlet port 7 on the cylinder head 6, thereby reducing the use of components such as pipes and clamps and improving the assembly efficiency of the inlet air storage tank 4. Two assembly lugs 46 are disposed at each of the left and right sides of the lower surface of the inlet air tank body 41, and a bolt hole is opened on the assembly lug 46. The inlet air storage tank 4 is assembled onto an outer housing of the motor 3 through the bolts and the assembly lugs 46.

An air outlet is further disposed on each of the cylinder heads 6 respectively. The four-cylinder electric air compressor further includes an air discharge pipe 8, one end of the air discharge pipe 8 is in communication with the air outlet of the cylinder head 6, and the other end of the air discharge pipe 8 is connected to the air channel of the vehicle. The air discharge pipe 8 is made of a copper pipe, and sealing between the air discharge pipe 8 and the air outlet of the cylinder head 6 is achieved by gluing. The sealing of the joints of the motor is also achieved by gluing. The change of the connection manner of each joint improves the IP rating of the electric air compressor in the present disclosure to IP67.

By using the above four-cylinder electric air compressor, the air flows through the air filter of the vehicle and then enters the inlet air storage tank 4, the inlet air storage tank 4 distributes the air to the four cylinder heads 6 of the air compressor, and then, the pistons within the cylinder heads 6 perform reciprocating motion under the actions of the motor 3, the crankshafts 11 and the connecting rods respectively. In the operation process, when the piston moves down, the cylinder head 6 sucks the air; when the piston moves up, the air compressor performs a compression process to compress the air sucked in the suction process and then discharge the air to the air channel of the vehicle, and the air is finally stored in an air storage tank of the vehicle for later use.

The four-cylinder electric air compressor further includes two electronic fans 5 for reducing temperatures of the cylinder heads 6, where one electronic fan 5 is located at an outer side of the left cylinder 1 and between two cylinder heads 6 of the left cylinder block 1, and the other electronic fan 5 is located at an outer side of the right cylinder block 2 and between two cylinder heads 6 of the right cylinder block 2. The arrangement of the electronic fans 5 enables the electric air compressor to have an independent cooling capability.

Parts unmentioned in the present disclosure may be realized by adopting or referring to the prior art.

Specific embodiments described herein are merely exemplary of the spirit of the present disclosure. Persons skilled in the art may make various modifications or supplementations or substitutions in a similar manner to the described specific embodiments without departing from the spirit of the present disclosure or surpassing the scope defined by the appended claims.

## Claims

1. A crankshaft assembly structure for a four-cylinder electric air compressor, comprising a crankshaft, a motor, a bearing, a balance block and a motor flange; wherein a shaft hole is opened on an end face of a crankshaft driving end, at least one first keyway is disposed on an inner wall of the shaft hole, and a bearing assembly seat is disposed at a side surface of the crankshaft driving end; an inner ring of a bearing is assembled on the bearing assembly seat of the crankshaft driving end, and the balance block is assembled to be on the crankshaft driving end and at an outer side of the bearing; an outer ring of the bearing is assembly-connected with the motor flange, at least one second keyway is disposed on an output shaft of the motor, the output shaft of the motor is inserted into the shaft hole of the crankshaft driving end, and the first keyway is connected with the second keyway by a key.

2. The crankshaft assembly structure for a four-cylinder electric air compressor according to claim 1, further comprising a lock nut, wherein an external thread is disposed at a position that is on the side surface of the crankshaft driving end and close to the end face, and the lock nut is thread-connected with the external thread of the crankshaft driving end to tightly press the balance block.

3. The crankshaft assembly structure for a four-cylinder electric air compressor according to claim 1, further comprising a cylinder block, wherein the crankshaft is disposed within the cylinder block, the motor flange comprises a flange plate and a flange sleeve located at the middle of the flange plate, the cylinder block is assembled onto an end face of one end of the output shaft of the motor through the flange plate, the flange sleeve is embedded into the cylinder block, and the outer ring of the bearing is assembly-connected within the flange sleeve.

4. The crankshaft assembly structure for a four-cylinder electric air compressor according to claim 3, wherein the flange plate is assembly-connected with the motor, a plurality of bolt holes are disposed at an edge of the flange plate, a plurality of assembly holes corresponding to the bolt holes are disposed on the cylinder block, and bolts are connected to the bolt holes through the assembly holes to assembly-connect the cylinder block with the flange plate.

5. The crankshaft assembly structure for a four-cylinder electric air compressor according to claim 1, wherein a first keyway is disposed at the inner wall of the shaft hole, a second keyway is disposed on the output shaft of the motor, and the first keyway is connected with the second keyway by a flat key.

6. The crankshaft assembly structure for a four-cylinder electric air compressor according to claim 1, wherein the first keyway is formed by opening a groove at the inner wall of the shaft hole along a radial direction of the crankshaft.

7. The crankshaft assembly structure for a four-cylinder electric air compressor according to claim 1, wherein the second keyway is formed by opening a groove is at the side surface of the output shaft of the motor toward a shaft center of the output shaft.

8. A four-cylinder electric air compressor, comprising a left cylinder block and a right cylinder block, and further comprising the crankshaft assembly structure for a four-cylinder electric air compressor according to any one of claims 1-7, wherein a motor is disposed between the left and right cylinder blocks, two cylinder heads are disposed at top ends of the left and right cylinder blocks respectively, two cylinder heads at the top end of the left cylinder block are arranged in a V-shape , and two cylinder heads at the top end of the right cylinder block are further arranged in a V-shape, a crankshaft, a first connecting rod, a second connecting rod, a first piston and a second piston are all disposed within each of the left and right cylinder blocks, one end of the first connecting rod is sleeved on the crankshaft, the other end of the first connecting rod is connected with the first piston, one end of the second connecting rod is sleeved on the crankshaft, and the other end of the second connecting rod is connected with the second piston; the motor is a dual output shaft motor, the crankshafts within the left and right cylinder blocks are driven by two output shafts of the motor to rotate respectively, and the crankshaft rotates to drive the first and second connecting rods to perform cycloidal motion and further drive the first and second pistons to perform reciprocating linear motion so as to realize air suction and discharge of the cylinder head.

9. The four-cylinder electric air compressor according to claim 8, wherein an air outlet is further disposed on each cylinder head respectively, the four-cylinder electric air compressor further comprises an air discharge pipe, one end of the air discharge pipe is in communication with the air outlet of the cylinder head, and the other end of the air discharge pipe is connected to an air channel of a vehicle.

10. The four-cylinder electric air compressor according to claim 8, further comprising two electronic fans for reducing temperatures of the cylinder heads, wherein one electronic fan is located at an outer side of the left cylinder block and between two cylinder heads of the left cylinder block, and the other electronic fan is located at an outer side of the right cylinder block and between two cylinder heads of the right cylinder block.
